# EUROPEAN PATENT SPECIFICATION

(11) **EP 0 274 446 B1**
(45) Date of publication and mention of the grant of the patent: **04.08.1993**
(21) Application number: 88300126.5
(22) Date of filing: 08.01.1988
(51) Int. Cl.: G02B 26/02

(54) **Method and apparatus for switching optical connector**
Methode und Gerät zum Schalten von optischen Steckern
Méthode et appareil pour commuter des connecteurs optiques

(30) Priority: 09.01.1987 JP 1685/87; 18.03.1987 JP 61370/87; 20.03.1987 JP 64000/87; 24.03.1987 JP 67897/87; 05.06.1987 JP 139936/87; 05.06.1987 JP 139937/87; 12.06.1987 JP 146493/87
(43) Date of publication of application: 13.07.1988
(73) Proprietor: THE FURUKAWA ELECTRIC CO., LTD., Tokyo (JP)
(72) Inventor: Kamiki, Kazuo c/o Chiba Works, Ichihara-shi Chiba-ken (JP); Yamaguchi, Shizuka c/o Chiba Works, Ichihara-shi Chiba-ken (JP); Kinoshita, Isamu c/o Chiba Works, Ichihara-shi Chiba-ken (JP); Sasaki, Koji c/o Chiba Works, Ichihara-shi Chiba-ken (JP); Miyazawa, Kazuhiro c/o Chiba Works, Ichihara-shi Chiba-ken (JP); Yanagawa, Hisaharu c/o Chiba Works, Ichihara-shi Chiba-ken (JP); Ogai, Mikio c/o Chiba Works, Ichihara-shi Chiba-ken (JP); Kamata, Yoshiyuki c/o Chiba Works, Ichihara-shi Chiba-ken (JP); Ochiai, Toshihiro c/o Chiba Works, Ichihara-shi Chiba-ken (JP)
(74) Representative: Gibson, Stewart Harry

(56) References cited:
- EP-A- 0 030 617
- FR-A- 2 406 211
- US-A- 4 204 310
- INTERNATIONAL CONFERENCE ON INTEGRATED OPTICS AND OPTICAL FIBER COMMUNICATION, Tokyo, 18th-20th July 1977, pages 343-346, Technical Digest; H. TAKIMOTO et al.: "A Splicing method with auxiliary fibers"

## Description

This invention relates to a method of and apparatus for changing over a connection between first and second optical connectors to a connection between the first optical connector and a third optical connector.

Optical connectors are used to connect optical transmission units which mainly contain optical fibers. The optical connectors are made of plastics or metal and are attached integrally to the ends of the optical transmission units, and are formed with alignment holes. When the optical transmission units are connected to each other using such optical connectors, the front end faces of a pair of optical connectors are opposed to each other, and pins are engaged within the alignment holes to align the two connectors.

In optical communication systems, defects, alteration of connection or transfer of optical communication cables occur frequently. At each occurrence, part of a cable, or an entire cable, is replaced by a new optical cable. A connection must be made each time, involving separation and reconnection of optical connectors.

It is necessary to make the changeover with minimum disturbance to the signal transmission. For example, in order to limit the period of interruption of an optical signal to 40 msec. or less, it is necessary to complete the changeover work of the optical connectors in an extremely short time.

However, the optical connectors are changed over manually. Even a skilful worker takes several tens of seconds to separate a pair of optical connectors and then reconnect one of the separated optical connectors with an optical connector prepared separately, during which period the transmission of optical signal is interrupted.

Accordingly, an object of this invention is to provide a method of and an apparatus for changing over a connection between first and second optical connectors to a connection between the first and a third optical connectors, which enable the changeover to be carried out in a short period without depending upon a worker's skill.

In accordance with this invention there is provided a method of changing over a connection between first and second optical connectors to a connection between said first optical connector and a third optical connector, each optical connector having front and rear end faces and holes extending longitudinally of the connector between its front and rear end faces, and the first and second optical connectors initially having their front end faces coincident with each other and being connected by pins partly engaged within respective said holes of the first optical connector and partly engaged within corresponding said holes of the second optical connector, said method comprising a first step of engaging the first optical connector with a main base of a connector changeover apparatus and engaging the second and third optical connectors with a sub-base of said apparatus, a second step of longitudinally advancing pushing rods of said apparatus into the holes of the second optical connector from its rear end face to displace said pins from the second optical connector, a third step of moving the main base and sub-base relative to each other to separate the first and second optical connectors from each other and bring the front end faces of the first and third optical connectors into coincidence with each other, and a fourth step of longitudinally advancing pushing rods of said apparatus into the holes of the first optical connector from its rear end face to displace said pins so as to project partly into the holes in the third optical connector.

Also in accordance with this invention, there is provided an apparatus for changing over a connection between first and second optical connectors to a connection between the first optical connector and a third optical connector, each connector having holes extending between front and rear end faces thereof, said apparatus comprising a main base for holding the first optical connector, a sub-base for holding the second and third optical connectors in parallel with each other, the second optical connector having a front end face thereof opposed to a front end face of the first optical connector and the first and second optical connectors being connected by pins engaged partly in said holes in said first optical connector and partly in said holes in the second optical connector, the apparatus further comprising a first set of pushing rods and drive means for advancing said first set of pushing rods into the holes of said second optical connector from its rear end face to displace said pins from the second connector, drive means for laterally moving the main base and sub-base relative to each other to bring the front end faces of the first and third optical connectors into coincidence with each other, and a second set of pushing rods and drive means for advancing said second set of pushing rods into the holes of the first optical connector from its rear end face to displace said pins so as to project partly into the holes in the third optical connector.

Embodiments of this invention will now be described by way of examples only and with reference to the accompanying drawings, in which:
Fig. 1 is a perspective view of optical connectors being changed over by a method and apparatus according to the present invention;
Fig. 2(a) to 2(e) are explanatory views sequentially showing the steps in a first embodiment of a method for changing over optical connectors according to the present invention;
Figs. 3(a) to 3(d) are explanatory views showing the steps in a second embodiment of a method for changing over optical connectors according to the invention;
Figs. 4, 5 and 6 are views showing selected steps in other embodiments of a method for changing over optical connectors according to the invention;
Fig. 7 is a diagram showing the variation in transmission loss during an example of changing over optical connectors according to the invention;
Fig. 8 is an explanatory view showing an alternative arrangement for the positions of the second and third optical connectors in carrying out a method according to the invention;
Fig. 9 is a plan view of an embodiment of apparatus for changing over optical connectors according to the present invention; and
Fig. 10 is a front view of the apparatus.

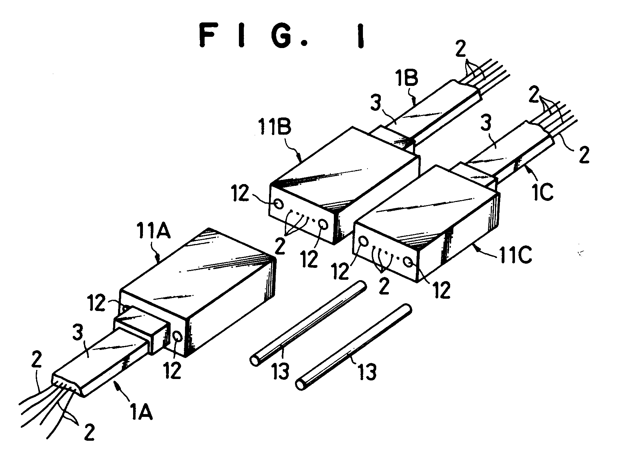

Fig. 1 shows multicore coated optical transmission units 1A, 1B, 1C, each having a flat rectangular sectional shape and comprising a plurality of optical fibers 2 integrally coated by a coating layer 3. Each of the coated optical transmission units 1A, 1B, 1C forms a constituent unit of an optical cable unit, which, in turn, forms a constituent unit of an optical cable, which is used as a transmission line.

Fig. 1 also shows optical connectors 11A, 11B, 11C formed of plastics or metal, and each having alignment holes 12 extending longitudinally of the optical connector from its front end face to its rear end face. The optical connectors 11A, 11B, 11C are integrally attached to the ends of the respective optical transmission units 1A, 1B, 1C, and the ends of the optical fibers 2 are exposed at the front end faces of the optical connectors 11A, 11B, 11C.

The above-mentioned optical connectors 11A, 11B, 11C might also be attached to the ends of a plurality of single-core coated optical transmission units aligned parallel with each other.

Fig. 1 shows pins 13 for connecting optical connector 11A with either of the optical connectors 11B, 11C. Each pin 13 has an outer diameter corresponding precisely with the diameter of the holes 12 of the optical connectors 11A, 11B, 11C and a length corresponding to the length of both optical connectors e.g. 11A, 11B when connected together.

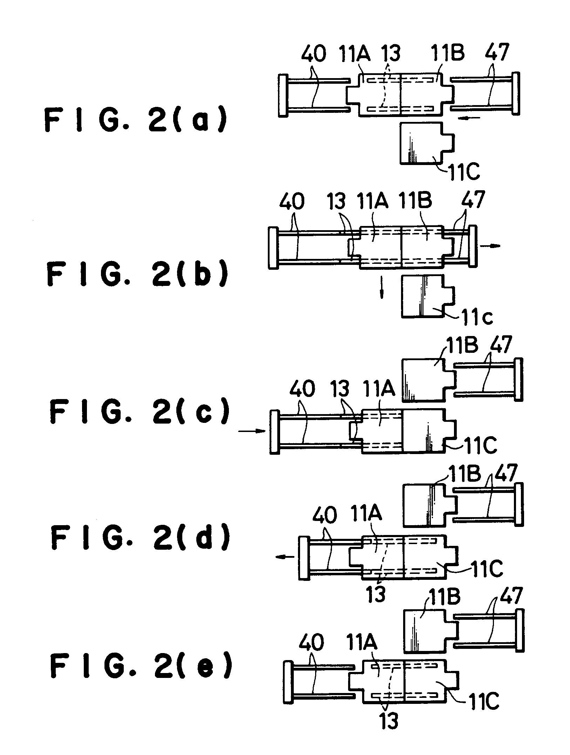

Figs. 2(a) to 2(e) sequentially show the steps of an embodiment of a method for changing over the optical connectors according to this invention.

Fig. 2(a) shows a pair of optical connectors 11A and 11B having their front end faces opposed to each other, and the pins 13 engaged within the two pairs of holes 12 to connect the two optical connectors 11A and 11B to each other.

The method changes over the connection between first and second optical connectors 11A, 11B to a connection between the first optical connector 11A and the third optical connector 11c. As shown in Fig. 2(a), the third connector 11C is disposed in parallel with and alongside the second optical connector 11B. Pushing rods 47 are advanced from the rear end face of the second optical connector 11B, to enter the holes 12 of the second optical connector 11B, as shown in Fig. 2(b), to move the pins 13 to the first optical connector 11A and to remove the pins 13 from the second optical connector 11B.

Then, as shown in Fig. 2(c), the first optical connector 11A is moved a predetermined distance to align with the third optical connector 11C instead of with the second optical connector 11B. At the same time the pin pushing rods 47 are retracted to their original position.

Thereafter, as shown in Fig. 2(d), pin pushing rods 40 are advanced from the rear end face of the first optical connector 11A, to contact the pins 13 and move them so that they partly project into the holes 12 of the third optical connector 11C: this completes the changeover of the optical connectors. Thereafter, as shown in Fig. 2(d), the pin pushing rods 40 are retracted to their original positions.

The step of advancing the pushing rods 47 may be carried out before placing the third optical connector 11C in position. However, the sequence shown in Figs. 2 is preferable, i.e. with the pins 13 being advanced after the third optical connector 11C is placed in its required position.

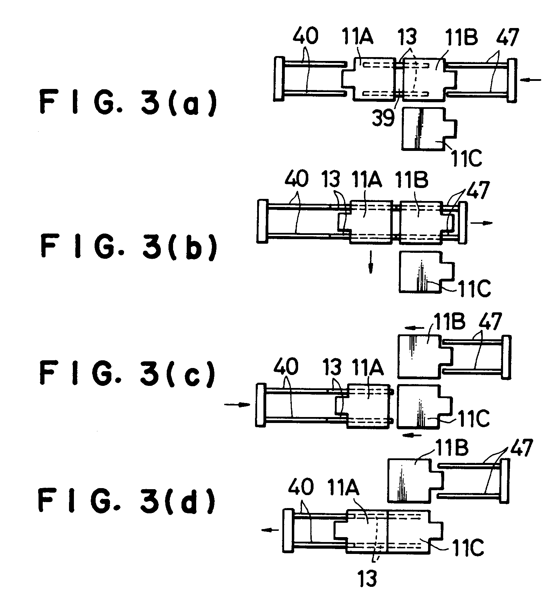

In another embodiment, the first optical connector 11A is moved a small distance away from the second and third optical connector 11B, 11C, to separate the front end faces of the optical connectors 11A, 11B as shown in Fig. 3(a), before the step of laterally moving the connectors which is shown in Fig. 2(b). This sets a fine gap L₁, typically 10 to 30% of the stroke of the pin 13. This avoids the possibility of the front end faces of the second optical connector 11B and the third optical connector 11C being damaged by the ends of the pins 13, when the first optical connector 11A is moved laterally in the step shown in Fig. 2(b).

After the gap L₁ of Fig. 3(a) is set, the changeover method is carried out in the sequence of steps shown in Figs. 3(b), 3(c) and 3(d). In Figs. 3(c) and (d), the optical connectors 11A and 11C are relatively moved to bring their front end faces into contact with each other, i.e. so as to eliminate the gap L₁. In this embodiment, the first optical connector 11A may be fixed and the second optical connector 11B moved away from the connector 11A, and preferably the third optical connector 11C is moved together with the second optical connector 11B.

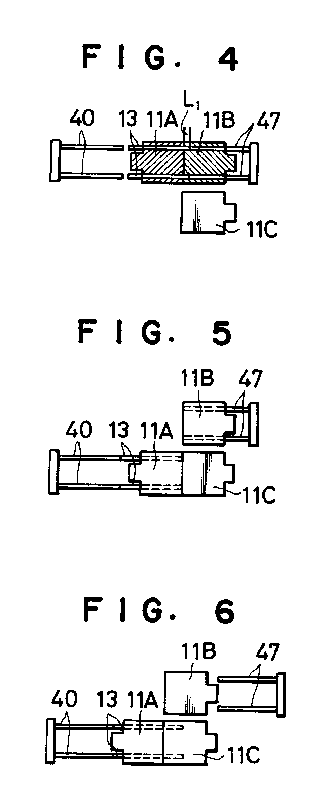

In another embodiment, before the pins 12 are displaced from the second optical connector 11B, in the pin advancing step shown in Figs. 2(a) to 2(b), the pins 13 are temporarily stopped as shown in Fig. 4, and the pins 13 are thereafter moved again to displace them from the second optical connector 11B. The reason for this is as follows.

It is necessary to changeover optical connectors at two or more locations when part of a transmission line is replaced with a new transmission line. In this case, if one pair of optical connectors is initially changed over and then the other pair of optical connectors is changed over, the signal interruption time on the existing transmission line is lengthened, but when the two pairs of optical connectors are simultaneously changed over, the signal interruption time is reduced by half.

The state shown in Fig. 4 maintains part of the pins 13 engaged within the second optical connector 11B. Thus the connection is still maintained between the optical connectors 11A, 11B on the existing transmission line.

In the following pin advancing step, the parts of the pins 13 remaining in the holes 12 of the second optical connector 11B are removed .

Therefore, the changeover at the two or more locations of the transmission line are simultaneously executed, starting from the state shown in Fig. 4, to shorten the above-mentioned signal interruption time.

In another embodiment, the step of laterally moving the optical connectors relative to each other is carried out whilst the pushing rods 47 remain inserted into the holes 12 of the second optical connector 11B, as shown in Fig. 5. Thus, in Figs. 2(a) and 2(b), there is a delay whilst the pushing rods 47 are removed from the holes 12 of the second optical connector 11B, before the optical connectors are moved laterally relative to each other: but in Fig. 5, the latter step is started whilst the pushing rods 47 remain in the holes 12 of the second optical connector 11B, and the changeover work is completed quicker.

The sequence of steps of Fig. 5 may be applied to the embodiment of Fig. 3.

In a further embodiment shown in Fig. 6, the return or backwards movement of the pins 13 is stopped when only parts of the pins 12 have entered the holes 12 of the third optical connector 11c, i.e. in the step of Fig. 2(d). In this state, the connecting loss can be measured during the time that the pins 13 are stopped, then the step of moving the pins can be completed if the measured connecting loss is smaller than the allowable value: the connection between the first optical connector 11A and the second optical connector 11B can be remade if the measured connecting loss exceeds the allowable value.

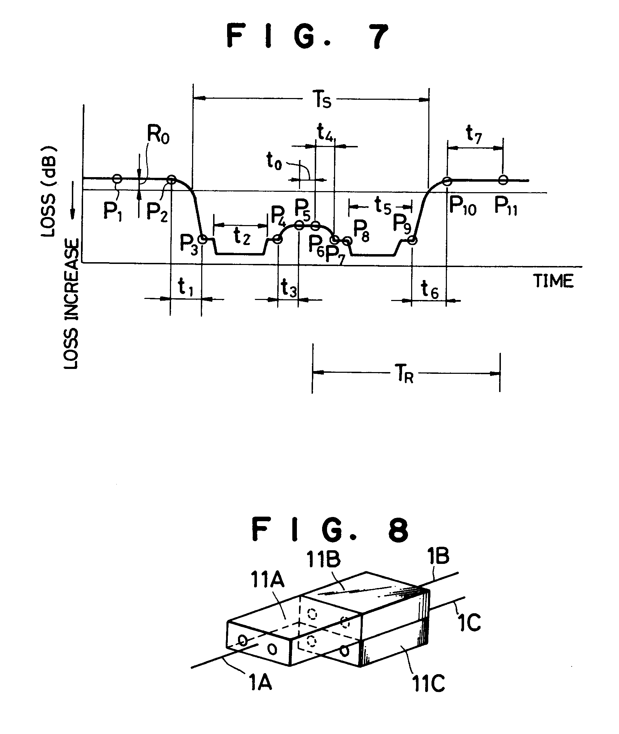

The transmission loss during the changeover when employing the embodiment of Fig. 6 is shown in Fig. 7. In Fig. 7, P₁ and P₂ are the starting and finishing points when the front halves of the pins 13 are displaced from the holes 12 of the second optical connector 11B during the forward movement of the pins, P₂ and P₃ are the starting and finishing times when the rear halves of the pins 13 are similarly displaced from the holes 12 of the second optical connector 11B, t₁ is the time from P₂ to P₃, t₂ is the time of the connector changeover step, P₄ and P₅ are the starting and finishing points when moving the rear halves of the pins 13 into the holes 12 of the third optical connector 11C, t₃ is the time from P₄ to P₅, and t₀ is the time during which the pins 13 are temporarily stopped. P₆ and P₇ are the starting and finishing points when the rear halves of the pins 13 are displaced from the holes 12 of the third optical connector 11C in order to remake the connection between optical connectors 11A and 11B, t₄ is the time from P₆ to P₇, P₈ and P₉ are the starting and finishing points of the return lateral movement of the optical connector 11A, t₅ is the time from P₈ to P₉, P₉ and P₁₀ are the starting and finishing points when engaging the rear halves of the pins 12 with the holes 12 of the second optical connector 11B, t₆ is the time from P₈ to P₉, and P₁₀ and P₁₁ are the starting and finishing points when engaging the rear halves of the pins 13 with the holes 12 of the second optical connector 11B. T_{S} is the time for which the optical signal is interrupted, and T_{R} is the time during which the connection between the original pair of optical connectors 11A, 11B is remade.

The connecting loss of the connection between the first optical connector 11A and the third optical connector 11C is measured during the time t₀ during which the pins 13 are temporarily stopped during their return movement. When the measured connecting loss is lower than the allowable value, the return or backwards movement of the pins is continued, but when the measured connecting loss exceeds the allowable value, the connection between the first and third optical connectors 11A, 11C is remade as discussed with reference to Fig. 7.

In the embodiments described above, the required changeover work can be carried out by keeping the first optical connector 11A fixed and laterally moving the second and third optical connectors 11B, 11C. Instead, the first optical connector 11A may be moved laterally whilst the second and third optical connectors remain fixed.

In the embodiments described above, the third optical connector 11C has been positioned alongside the second optical connector 11B during the changeover. However, the third optical connector 11C may be disposed below or above the second optical connector 11B, as shown in Fig. 8.

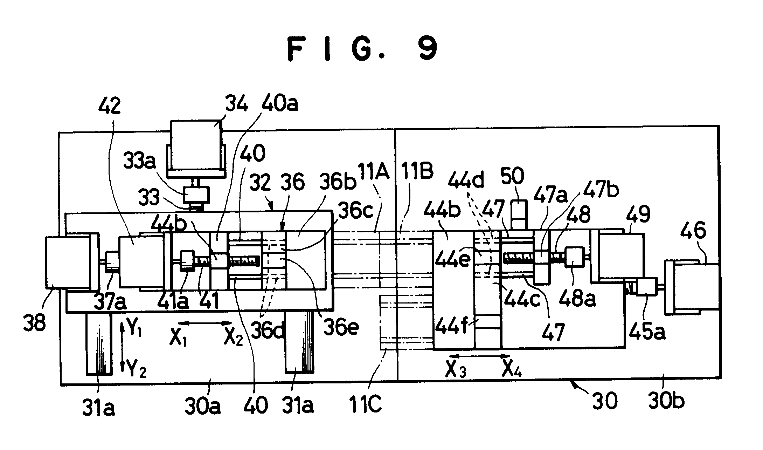

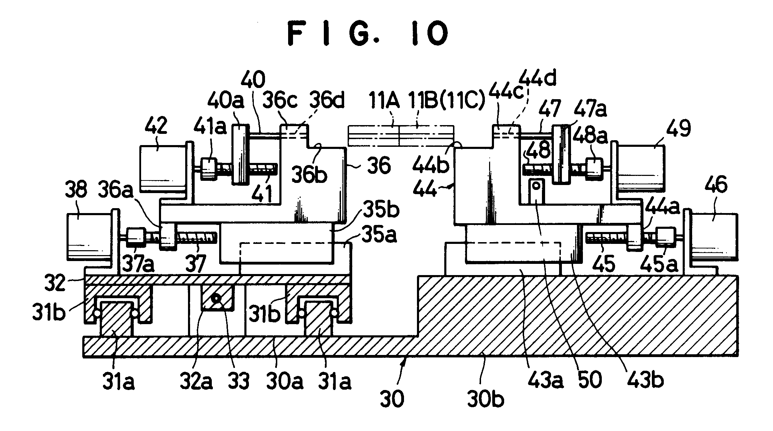

Figs. 9 and 10 show an embodiment of an apparatus for carrying out the connection changeover method according to this invention. Normally an apparatus as shown in Figs. 9 and 10 is disposed at both ends of a length of transmission line to be changed over. The apparatus shown in Figs. 9 and 10 comprises a platform 30 having a rectangular flat shape, the upper surface of the platform 30 having a low surface 30a and a high surface 30b.

A parallel guide rails 31a extend along the Y₁-Y₂ axis shown in Fig. 9 on the low surface 30a of the platform 30. Sliders 31b are slidably engaged on the guide rails 31a and a movable base 32 is mounted on the sliders 31b so that the base 32 is movable along the Y₁-Y₂ axis. The level of the top surface of the base 32 is the same as the high surface 30b of the platform 30. A block 32a is fixed to the lower surface of the base 32 and has a threaded hole extending along the Y₁-Y₂ axis. A drive shaft 33 is engaged with the threaded hole of the block 32a, and the drive shaft 33 is connected to the output shaft of a drive motor (stepping motor) 34 through a coupling 33a. Thus, the base 32 moves along the Y₁-Y₂ axis by normal or reverse rotation of the drive motor 34.

Guide rails 35a extend along the X₁-X₂ axis (shown in Fig. 9) on the upper surface of the base 32. Sliders 35b are slidably engaged with the guide rails 35a, and a main base 36 is attached to the sliders 35b so that the main base 36 is movable along the X₁-X₂ axis. A block 36a is fixed to the lower surface of the main base 36 at the rear of the latter. Block 36a has a threaded hole extending along the X₁-X₂ axis. A drive shaft 37 is engaged with the threaded hole of the block 36a, and the drive shaft 37 is connected through a coupling 37a to the output shaft of a drive motor (stepping motor) 38 mounted on the base 32. Thus, the main base 36 moves along the X₁-X₂ axis by normal or reverse rotation of the drive motor 38.

An L-shaped holder 36b is formed on the upper surface of the main base 36 at the front end of the latter, and formed to receive the optical connector 11A. A vertical wall 36c which forms part of the holder 36b of the main base 36 is perforated with two parallel through holes 36d, and a groove 38e for receiving coated optical transmission unit 1A is formed on the upper surface of the vertical wall 38c. The through holes 36d receive the pin pushing rods 40, which are attached to a holder 40a. A groove 40b is formed on the upper surface of the holder 40a for receiving the coated optical transmission unit 1A. A drive shaft 41 is engaged with a threaded hole formed through the holder 40a parallel with the pin pushing rods 40, and is connected through a coupling 41a to the output shaft of a drive motor (stepping motor) 42, which is disposed on the main base 38 at the rear end of the latter. Thus, the pin pushing rods 40 are movable forwards or backwards along the X₁-X₂ axis in the through holes 38d and the holes 12 of the optical connector 11A, by normal or reverse rotation of the drive motor 42.

Guide rails 43a extend along the X₃-X₄ axis (shown in Fig. 9) on the high surface 30b of the platform 30. Sliders 43b are slidably engaged with the guide rails 43a, and a sub-base 44 is mounted to the sliders 43b so as to be movable along the X₃-X₄ axis. A block 44a, having a threaded hole extending along the X₃-X₄ axis, is fixed to the lower surface of the sub-base 44 at the rear end of the latter. A drive shaft 45 is engaged with the threaded hole in the block 44a, and is connected through a coupling 45a to the output shaft of a drive motor (stepping motor) 46. The sub-base 44 is movable forwards or backwards along the X₃-X₄ axis by normal or reverse rotation of the drive motor 46. An inverted L-shaped holder 44B is formed on the upper surface of the sub-base 44 at its front end, and is arranged to receive the optical connectors 11B, 11C aligned in parallel with each other.

Two parallel through-holes 44d extend through a vertical wall 44C of the holder 44b, and grooves 44a, 44f are formed in the upper surface of the vertical wall 44c for receiving the coated optical transmission units 1B, 1C. The through-holes 44d receive the pin pushing rods 47, and are aligned with the through-holes 36d of the holder 36. The pair of pin pushing rods 47 are attached to a holder 47a. A drive shaft 48 is engaged with a threaded hole formed in the holder 47a parallel to the pin pushing rods 47. Drive shaft 48 is connected through a coupling 48a to the output shaft of a drive motor (stepping motor) 49, which is mounted on the sub-base 44 at the rear end thereof.

Thus, the pin pushing rods 47 are slidable movable forwards or backwards along the X₁-X₂ axis in the through holes 44d and the holes 12 of the optical connector 11B.

A position detecting sensor 50 is mounted on the sub-base 44, to detect the position of the pushing rods 47. The position detecting sensor 50 is connected to the input side of a controller (not shown) and when the pin pushing rods 47 move forward to a predetermined position, a predetermined signal is supplied to the controller. The drive motors 34, 42, 46, 49 are electrically connected to the output side of the controller, which outputs a drive signal to the drive motors.

In use of the changeover apparatus shown in Figs. 9 and 10, the first optical connector 11A and the second optical connector 11B are engaged with the holder 38b of the main base 36 and the holder 44b of the sub-base 44 respectively, and the third optical connector 11C is engaged with the holder 44b of the sub-base 44, parallel with the second optical connector 11B.

Then, the pushing rods 40, 47, the main base 36 and the sub-base 44 are displaced in the manner described above with reference to Figs. 2 to 6, to change the connection between optical connectors 11A and 11B to a connection between optical connectors 11A and 11C. The controller to which position detecting sensor 50 is connected suitably controls the movements of the pushing rods 40, 47, the main base 38 and the sub-base 44.

The switching apparatus Figs. 9 and 10 may be altered to changeover the optical connectors in the manner shown in Fig. 8: in this case the arrangements of the pushing rods 40, 47, the main base 38 and the sub-base 44 are appropriately altered in design.

Alternative forms of actuators may be used, in the apparatus Figs. 9 and 10, for moving the pushing rods 40, 47: for example a spring or solenoid mechanism may be employed instead of the drive motors shown.

In carrying out the method of this invention, the optical connectors are changed over in an extremely short time without depending upon the worker's skill, and therefore with minimum period of interruption to the optical signal transmission. Further, the apparatus which has been described enables the method to be carried out in a mechanically automated manner.

## Claims

1. A method of changing over a connection between first and second optical connectors (11A, 11B) to a connection between said first optical connector (11A) and a third optical connector (11C), each optical connector having front and rear end faces and holes (12) extending longitudinally of the connector between its front and rear end faces, and the first and second optical connectors (11A, 11B) initially having their front end faces coincident with each other and being connected by pins (13) partly engaged within respective said holes (12) of the first optical connector (11A) and partly engaged within corresponding said holes (12) of the second optical connector (11B), said method comprising a first step of engaging the first optical connector (11A) with a main base (32) of a connector changeover apparatus and engaging the second and third optical connectors (11B, 11C) with a sub-base (44) of said apparatus, a second step of longitudinally advancing pushing rods (47) of said apparatus into the holes (12) of the second optical connector (11B) from its rear end face to displace said pins (13) from the second optical connector (11B), a third step of moving the main base (32) and sub-base (44) relative to each other to separate the first and second optical connectors (11A, 11B) from each other and bring the front end faces of the first and third optical connectors (11A, 11C) into coincidence with each other, and a fourth step of longitudinally advancing pushing rods (40) of said apparatus into the holes (12) of the first optical connector (11A) from its rear end face to displace said pins (13) so as to project partly into the holes (12) in the third optical connector (11C).

2. A method as claimed in claim 1, in which the second step is carried out before the first step.

3. A method as claimed in claim 1, wherein before carrying out the third step, the first and second optical connectors (11A, 11B) are moved apart such that a small gap (L₁) exists between their front end faces, and after carrying out the third step, the first and third optical connectors (11A, 11C) are brought together.

4. A method as claimed in claim 1, wherein before fully removing the pins (13) from the second optical connector (11B) in the second step, the pins (13) are temporarily stopped.

5. A method as claimed in claim 1, wherein the pin pushing rods (47) inserted into the holes (12) of the second optical connector (11B) remain in said holes (12) after the second step and during the third step.

6. A method as claimed in claim 1, wherein when the pins (13) are partially engaged with the third optical connector (11C) during the fourth step, the pins (13) are temporarily stopped, the connection loss between the first and third optical connectors (11A, 11C) is measured and the fourth step is continued if the measured connecting loss is an allowable value or lower, and the first and second optical connectors (11A, 11B) are reconnected if the measured connecting loss is above said allowable value.

7. An apparatus for changing over a connection between first and second optical connectors (11A, 11B) to a connection between the first optical connector (11A) and a third optical connector (11C), each connector having holes (12) extending between front and rear end faces thereof, said apparatus comprising a main base (32) for holding the first optical connector (11A), a sub-base (44) for holding the second and third optical connectors (11B, 11C) in parallel with each other, the second optical connector (11B) having a front end face thereof opposed to a front end face of the first optical connector (11A) and the first and second optical connectors (11A, 11B) being connected by pins (13) engaged partly in said holes (12) in said first optical connector (11A) and partly in said holes (12) in the second optical connector (11B), the apparatus further comprising a first set of pushing rods (47) and drive means (49) for advancing said first set of pushing rods (47) into the holes (12) of said second optical connector (11B) from its rear end face to displace said pins (13) from the second connector (11B), drive means (34) for laterally moving the main base (32) and sub-base (44) relative to each other to bring the front end faces of the first and third optical connectors (11A, 11C) into coincidence with each other, and a second set of pushing rods (40) and drive means (42) for advancing said second set of pushing rods (40) into the holes (12) of the first optical connector (11A) from its rear end face to displace said pins (13) so as to project partly into the holes (12) in the third optical connector (11C).

8. An apparatus as claimed in claim 7, further comprising drive means (38) for moving the main base (32) and sub-base (44) relative to each other parallel to the axes of said pushing rods (40, 47).

## Patentansprüche

1. Verfahren zum Umschalten einer Verbindung zwischen ersten und zweiten optischen Verbindern (11A, 11B) zu einer Verbindung zwischen dem ersten optischen Verbinder (11A) und einem dritten optischen Verbinder (11C), wobei jeder optische Verbinder vordere und hintere Endflächen und Löcher (12) aufweist, die sich in Längsrichtung des Verbinders zwischen ihren vorderen und hinteren Endflächen erstrecken, und wobei ursprünglich die vorderen Endflächen der ersten und zweiten optischen Verbinder (11A, 11B) zusammenfallen und mit Hilfe von Stiften (13) verbunden sind, die teilweise in die entsprechenden Löcher (12) des ersten optischen Verbinders (11A) und teilweise in die entsprechenden Löcher (12) des zweiten optischen Verbinders (11B) eingreifen, wobei das Verfahren einen ersten Schritt, den ersten optischen Verbinder (11A) mit einem Hauptgrundteil (32) einer Verbinderumschaltungsvorrichtung in Eingriff zu bringen und den zweiten und dritten optischen Verbinder (11B, 11C) mit einem Teilgrundteil (44) der Vorrichtung in Eingriff zu bringen, einen zweiten Schritt, Druckstangen (47) der Vorrichtung in die Löcher (12) des zweiten optischen Verbinders (11B) von dessen rückwärtiger Endfläche her in Längsrichtung vorzubewegen, um die Stifte (13) vom zweiten optischen Verbinder (11B) zu verschieben, einen dritten Schritt, den Hauptgrundteil (32) und den Teilgrundteil (44) relativ zueinander zu bewegen, um die ersten und zweiten optischen Verbinder (11A, 11B) voneinander zu trennen und die vorderen Endfläche der ersten und dritten optischen Verbinder (11A, 11C) zusammentreffen zu lassen, und einen vierten Schritt aufweist, Druckstangen (40) der Vorrichtung in die Löcher (12) des ersten optischen Verbinders (11A) von dessen rückwärtiger Endfläche her in Längsrichtung vorzubewegen, um die Stifte (13) zu verschieben, so daß sie teilweise in die Löcher (12) des dritten optischen Verbinders (11C) hineinragen.

2. Verfahren nach Anspruch 1, bei dem der zweite Schritt vor dem ersten Schritt durchgeführt wird.

3. Verfahren nach Anspruch 1, bei dem vor Durchführung des dritten Schrittes die ersten und zweiten optischen Verbinder (11A, 11B) voneinander wegbewegt werden, so daß ein kleiner Zwischenraum (L₁) zwischen ihren vorderen Endflächen vorhanden ist, und bei dem nach Ausführung des dritten Schritts die ersten und dritten optischen Verbinder (11A, 11C) zusammengebracht werden.

4. Verfahren nach Anspruch 1, bei dem vor dem vollständigen Entfernen der Stifte (13) vom zweiten optischen Verbinder (11B) im zweiten Schritt die Stifte (13) zeitweilig angehalten werden.

5. Verfahren nach Anspruch 1, bei dem die Stiftdruckstangen (47), die in die Löcher (12) des zweiten optischen Verbinders (11B) eingeführt sind, nach dem zweiten Schritt und während des dritten Schritts in den Löchern (12) verbleiben.

6. Verfahren nach Anspruch 1, bei dem, wenn die Stifte (13) teilweise mit dem dritten optischen Verbinder (11C) während des vierten Schritts in Eingriff gebracht sind, die Stifte (13) zeitweilig angehalten werden, wobei der Verbindungsverlust zwischen den ersten und dritten optischen Verbindern (11A, 11C) gemessen wird und der vierte Schritt fortgesetzt wird, wenn der gemessene Verbindungsverlust einen erlaubten Wert hat oder niedriger ist, und bei dem die ersten und zweiten optischen Verbinder (11A, 11B9 erneut verbunden werden, wenn der gemessene Verbindungsverlust oberhalb des zulässigen Wertes ist.

7. Vorrichtung zum Umschalten einer Verbindung zwischen ersten und zweiten optischen Verbindern (11A, 11B) zu einer Verbindung zwischen dem ersten optischen Verbinder (11A) und einem dritten optischen Verbinder (11C), wobei jeder Verbinder Löcher (12) aufweist, die sich zwischen vorderen und hinteren Endflächen desselben erstrecken, wobei die Vorrichtung einen Hauptgrundteil (32) zum Halten des ersten optischen Verbinders (11A), einen Teilgrundteil (44) zum Halten der zweiten und dritten optischen Verbinder (11A, 11B) parallel miteinander aufweist, wobei eine vordere Endfläche des zweiten optischen Verbinders (11B) einer vorderen Endfläche des ersten optischen Verbinders (11A) gegenübersteht und die ersten und zweiten optischen Verbinder (11A, 11B) durch Stifte (13) verbunden sind, die teilweise in den Löchern (12) in dem ersten optischen Verbinder (11A) und teilweise in den Löchern (12) im zweiten optischen Verbinder (11B) in Eingriff stehen, wobei die Vorrichtung weiter einen ersten Satz von Druckstangen (47) und Antriebsmittel (49) zum Vorwärtsbewegen des ersten Satzes von Druckstangen (47) in die Löcher (12) des zweiten optischen Verbinders (11B) von dessen rückwärtiger Endfläche her, um die Stifte (13) von dem zweiten Verbinder (11B) zu verschieben, Antriebsmittel (34) zum seitlichen Bewegen des Hauptgrundteils (32) und des Teilgrundteils (44) relativ zueinander, um die vorderen Endflächen der ersten und dritten optischen Verbinder (11A, 11C) miteinander zusammenfallen zu lassen, und einen zweiten Satz von Druckstangen (40) und Antriebsmittel (42) zum Vorwärtsbewegen des zweiten Satzes von Druckstangen (40) in die Löcher (12) des ersten optischen Verbinders (11A) von dessen rückwärtiger Endfläche her aufweist, um die Stifte (13) zu verschieben, so daß diese teilweise in die Löcher (12) des dritten optischen Verbinders (11C) vorstehen.

8. Vorrichtung nach Anspruch 7, die darüber hinaus Antriebsmittel (38) zum Bewegen des Hauptgrundteils (32) und des Teilgrundteils (44) relativ zueinander parallel zu den Achsen der Druckstangen (40, 47) aufweist.

## Revendications

1. Procédé de commutation permettant de passer d'une connexion entre des premier et second connecteurs optiques (11A, 11B) à une connexion entre ledit premier connecteur optique (11A) et un troisième connecteur optique (11C), chaque connecteur optique possédant des faces terminales avant et arrière et des ouvertures (12) s'étendant selon l'axe longitudinal du connecteur et entre ses faces avant et arrière, les premier et second connecteurs optiques (11A, 11B) ayant initiallement leurs faces avant en coïncidence et étant connectés par des broches (13) pénétrant partiellement d'une part à l'intérieur desdites ouvertures (12) du premier connecteur optique (11A) et d'autre part à l'intérieur desdites ouvertures (12) du second connecteur optique (11B), ledit procédé comprenant une première étape de mise en prise du premier connecteur optique (11A) avec un support principal (32) d'un dispositif de commutation de connecteur et de mise en prise des second et troisième connecteurs optiques (11B, 11C) avec un support secondaire (44) dudit dispositif, une seconde étape consistant à faire pénétrer longitudinalement des tiges (47) dudit dispositif dans les ouvertures (12) placées sur la face arrière du second connecteur optique (11B) afin de déplacer lesdites broches (13) hors du second connecteur optique (11B), une troisième étape de déplacement relatif du support principal (32) par rapport au support secondaire (44) afin de séparer les premier et second connecteurs optiques (11A, 11B) l'un de l'autre et amener les faces terminales avant des premier et troisième connecteurs (11A, 11C) en coïncidence, et une quatrième étape consistant à faire pénétrer longitudinalement des tiges (40) dudit dispositif dans les ouvertures (12) placées sur la face arrière du premier connecteur optique (11A) afin de déplacer lesdites broches (13) de façon à les faire pénétrer partiellement à l'intérieur desdites ouvertures (12) du troisième connecteur optique (11C).

2. Procédé selon la revendication 1, dans lequel la seconde étape est effectuée avant la première étape.

3. Procédé selon la revendication 1, dans lequel, avant l'exécution de la troisième étape, les premier et second connecteurs optiques (11A, 11B) sont séparés de façon qu'il existe un petit espace (L₁) entre leurs faces terminales avant, et après l'exécution de la troisième étape, les premier et troisième connecteurs optiques (11A, 11C) sont réunis.

4. Procédé selon la revendication 1, dans lequel, avant d'enlever complètement les broches (13) du second connecteur optique (11B) lors de la seconde étape, les broches (13) sont temporairement bloquées.

5. Procédé selon la revendication 1, dans lequel les tiges (47) permettant de pousser les broches insérées dans les ouvertures (12) du second connecteur optique (11B) restent dans lesdites ouvertures (12) après la seconde étape et pendant la troisième étape.

6. Procédé selon la revendication 1, dans lequel, lorsque les broches (13) pénètrent partiellement à l'intérieur du troisième connecteur optique (11C) lors de la quatrième étape, les broches (13) sont temporairement bloquées, la perte de connexion entre les premier et troisième connecteurs optiques (11A, 11C) est mesurée et la quatrième étape est continuée si la perte de connexion mesurée possède une valeur inférieure ou égale à une valeur autorisée, les premier et second connecteurs optiques (11A, 11B) étant reconnectés si la perte de connexion mesurée possède une valeur supérieure à ladite valeur autorisée.

7. Dispositif de commutation permettant de passer d'une connexion entre des premier et second connecteurs optiques (11A, 11B) à une connexion entre ledit premier connecteur optique (11A) et un troisième connecteur optique (11C), chaque connecteur optique présentant des ouvertures (12) s'étendant entre les faces avant et arrière dudit connecteur, ledit dispositif comprenant un support principal (32) permettant de maintenir le premier connecteur optique (11A), un support secondaire (44) permettant de maintenir les second et troisième connecteurs optiques (11B, 11C) parallèles l'un par rapport à l'autre, le second connecteur optique (11B) possédant une face terminale avant opposée à une face terminale avant du premier connecteur optique (11A) et les premier et second connecteurs optiques (11A, 11B) étant connectés par des broches (13) pénétrant partiellement d'une part à l'intérieur desdites ouvertures (12) dudit premier connecteur optique (11A) et d'autre part à l'intérieur desdites ouvertures (12) du second connecteur optique (11B), le dispositif comprenant également un premier jeu de tiges de poussage (47) et des moyens d'actionnement (49) permettant de faire avancer ledit premier jeu de tiges poussantes (47) à l'intérieur des ouvertures (12) placées sur la face arrière dudit second connecteur optique (11B) afin de déplacer lesdites broches (13) hors du second connecteur optique (11B), des moyens d'actionnement (34) permettant de déplacer le support principal (32) par rapport au support secondaire (44) afin d'amener les faces terminales avant des premier et troisième connecteurs (11A, 11C) en coïncidence, et un second jeu de tiges de poussage (40) et des moyens d'actionnement (42) permettant de faire avancer ledit second jeu de tiges poussantes (40) à l'intérieur des ouvertures (12) placées sur la face arrière dudit premier connecteur optique (11A) afin de déplacer lesdites broches (13) de façon à les faire pénétrer partiellement à l'intérieur desdites ouvertures (12) du troisième connecteur optique (11C).

8. Dispositif selon la revendication 7, comprenant également des moyens d'actionnement (38) permettant de déplacer, parallèlement aux axes desdites tiges de poussage (40, 47), le support principal (32) par rapport au support secondaire (44).
